# DEMANDE DE BREVET EUROPEEN

(11) **EP 4 321 231 A1**
(43) Date de publication de la demande: **14.02.2024**
(21) Numéro de dépôt: 23187946.1
(22) Date de dépôt: 26.07.2023
(51) Int. Cl.: B01D 29/15, B01D 29/66, B01D 35/153, B01D 35/18

(54) **FILTRE A EAU PERMETTANT UNE PURGE ET UTILISATION DU FILTRE POUR EPURER UNE EAU DESTINEE A UNE CHAMBRE DE COMBUSTION D'UN VEHICULE**

(30) Priorité: 12.08.2022 FR 2208282
(71) Demandeur: Sogefi Filtration, 78280 Guyancourt (FR)
(72) Inventeur: COLLICARD, Florent, 35140 SAINT-AUBIN-DU-CORMIER (FR); LE BLOA, Laurent, 14760 BRETTEVILLE-SUR-ODON (FR)
(74) Mandataire: Plasseraud IP

(57) **Abrégé**

Le filtre (1) épure l'eau à injecter dans un moteur de véhicule et peut fonctionner selon deux modes distincts, à savoir :
- un mode filtrant, dans lequel l'eau brute arrive par l'entrée (3) du boîtier (2), traverse un média (5) annulaire avant de rejoindre sous forme épurée la sortie (4), le média et l'intérieur du boîtier pouvant être chauffés par une partie intérieure chauffante (6c) ;
- un mode de purge pour refouler, à l'arrêt du véhicule, l'eau contenue dans le boîtier, via un passage (O2) libéré par une vanne (10) et assurant la communication directe entre l'entrée (3) et une zone (Z2) d'aval de la filtration, un fluide gazeux pouvant être injecté dans le boîtier pour permettre le reflux d'eau vers l'entrée via le passage (O2). La vanne présente un clapet dont la partie d'obturation (14) maintient obturé ce passage (O2) par défaut et dans le premier mode.

## Description

L'invention concerne les systèmes d'alimentation en eau à destination d'une chambre de combustion d'un véhicule motorisé, en complément du carburant, et plus particulièrement les filtres permettant de distribuer une eau filtrée afin de ne pas encrasser les injecteurs. L'invention concerne aussi une utilisation d'un filtre mis en oeuvre dans une ligne de distribution d'eau vers un moteur à combustion interne.

Il devient de plus en plus fréquent d'injecter de l'eau dans la chambre de combustion. L'injection d'eau dans un moteur à combustion interne peut permettre une réduction significative de la consommation en carburant d'un véhicule, mais aussi de l'émission des polluants/particules fines. L'injection d'eau peut convenir dans un circuit d'injection pour moteur essence : on parle de combustion par voie humide.

Cependant, la gestion de l'eau à stocker et à acheminer dans la chambre de combustion, pour permettre ce fonctionnement, pose certaines difficultés, notamment lorsque les conditions extérieures sont particulièrement froides. Dans un environnement à moins de 0°C, du gel/givre va se former et limiter, voire bloquer le flux d'eau dans le circuit. Par ailleurs, l'eau à injecter doit être d'un grand niveau de pureté, ce qui nécessite une filtration.

Le document FR 3077340 décrit par exemple une boucle d'injection d'eau dans laquelle un filtre est placé afin de fournir de l'eau propre sans la contrainte de disposer d'un réservoir d'eau déminéralisée. Prévoir des réserves d'eau déminéralisée s'avère fastidieux et onéreux par comparaison avec un simple remplissage avec de l'eau courante, sachant en outre que le véhicule peut circuler dans une région où l'eau déminéralisée n'est pas aisément disponible. Des sources de chauffage sont ajoutées, dans le réservoir et dans le boîtier de filtre.

Un inconvénient de ce type de filtration réside dans la faible réactivité du système pour permettre le bon fonctionnement, lorsque des problèmes de gel sont rencontrés. L'opération de chauffage peut prendre beaucoup de temps pour un retour à un fonctionnement normal.
Le document EP 3 700 653 A1 propose un filtre qui permet une phase de purge, avec un agencement requérant deux clapets anti-retours à bille. Cet agencement se situe dans une tête, éventuellement pourvue d'un organe réchauffeur, fonctionnant comme un bouchon qui s'insère dans un bol pour fermer l'accès à la chambre de filtration. Une limitation de l'encombrement d'un tel filtre implique typiquement de réduire la place libre pour le média de filtration dans le bol.

Il existe donc un besoin pour intégrer une ligne de distribution d'eau dans un véhicule, en s'assurant de la pureté de cette eau et en minimisant l'apparition et/ou l'impact de phénomènes de gel empêchant d'obtenir un système d'injection d'eau opérationnel.
Il serait en outre intéressant de permettre une épuration d'eau avec un dispositif simple d'assemblage, avec un bon compromis entre l'efficacité/longévité du filtre, l'effet réchauffant, et l'encombrement.

Afin d'améliorer la situation, il est proposé selon l'invention un filtre à eau pour injection (de cette eau) dans un moteur à combustion interne, le filtre comprenant :
- un boîtier pourvu d'une entrée pour l'eau liquide brute à filtrer et d'une sortie d'évacuation pour l'eau liquide épurée,
- un élément filtrant incluant un média de filtration, monté/se montant dans le boîtier et typiquement interposé (dans la chambre de filtration délimitée par le boîtier) entre l'entrée et une zone d'aval en communication avec la sortie ;
- un passage de mise en communication directe entre l'entrée et la zone d'aval de filtration où circule l'eau liquide épurée ; et
- une vanne d'obturation du passage, la vanne présentant un clapet dont la partie d'obturation maintient obturé ledit passage lorsque l'eau liquide brute entre dans le boîtier via l'entrée, tout en étant adapté, lorsque l'eau liquide brute n'entre plus dans le boîtier via l'entrée, à libérer ledit passage, dans une configuration de purge d'eau par injection d'un fluide gazeux dans le boîtier de préférence via la sortie, ce qui permet un reflux d'eau hors du boîtier, vers l'entrée via le passage.
Le passage (libéré par la vanne) peut être délimité par un flasque de l'élément filtrant qui recouvre une première extrémité annulaire du média. Le clapet est typiquement supporté à l'aide du/par ce flasque.

Le filtre peut être aussi pourvu d'un organe réchauffeur ou système similaire apte à prévenir la formation de glace à partir d'une eau résiduelle ayant pu rester dans le boîtier, à l'arrêt du véhicule ou système embarquant le filtre. Le réchauffeur est rendu solidaire du boîtier et présente une partie de chauffage qui est entourée par une paroi du boîtier, par exemple une paroi latérale tubulaire. Plus généralement, le filtre dispose d'une partie de chauffage qui peut traverser ou être adjacente à une extrémité axiale ouverte de l'élément filtrant, qui est par exemple une extrémité où est prévue un passage d'écoulement d'eau épurée. La vanne peut se situer à l'opposé ou, tout du moins, le flasque peut s'étendre dans l'élément filtrant à l'opposé d'une telle extrémité ouverte.
Le boîtier peut présenter une paroi latérale agencée autour d'un axe central et reliée à une première extrémité axiale du boîtier. Typiquement, le média de filtration s'étend entièrement à l'intérieur du boîtier de façon annulaire, entre la première extrémité axiale et une deuxième extrémité axiale du boîtier opposée à la première extrémité axiale.

Grâce à ces dispositions, le filtre peut participer à fournir une eau exempte d'impuretés gênantes pour le moteur ou pour la qualité de la combustion tout en minimisant le risque de problème dans le boîtier dû à un démarrage à froid. De plus, l'eau résiduelle (encore présente) peut être aisément chauffée par un réchauffeur qui diffuse de la chaleur au coeur du filtre, par exemple à l'intérieur du boîtier et sur une longueur importante du boîtier, éventuellement supérieure à la moitié de la longueur du média lorsque le boîtier est allongé/plus long que large.

Le clapet, par exemple élastiquement déformable, peut être du type à fermeture automatique du passage (dans une configuration par défaut/non sollicité par une pression/surpression provenant de la zone d'aval). Le clapet est de préférence du type non commandé/passif. Le clapet peut libérer automatiquement le passage dès qu'un seuil de pression (surpression) est atteint ou dépassé du côté de la zone d'aval.

Avec une structure à clapet, le filtre reste simple à assembler tout en intégrant des fonctions efficaces pour prévenir des problèmes de mise en route par temps froid/gel. Le filtre peut être préventivement purgé, en associant par exemple une commande d'insufflation d'air et une structure de retour de l'eau vers un réservoir via l'entrée, ce qui est permis par la facilité de la vanne à s'ouvrir dans des conditions de circulation inverses du fonctionnement normal de filtration. L'écoulement gazeux inverse peut résulter d'une mise sous pression en aval du filtre (côté sortie), utilisant le cas échéant un pompage propre au fluide gazeux utilisé. L'ouverture avec une voie de circulation en dérivation du média permet avantageusement d'éviter au maximum le passage du contre-flux dans le média : on évite ainsi un possible phénomène de relargage de particules. Le passage peut permettre de créer une voie pour refluer l'eau sélectivement sans passer par le média.

Dans divers modes de réalisation de l'agencement, il est prévu une ou plusieurs des dispositions suivantes :
- le boîter est un composant (externe) réalisé en deux pièces pour former un bol et un couvercle fixé de façon détachable sur le bol.
- le couvercle forme la deuxième extrémité axiale du boîtier.
- le couvercle forme sélectivement un support de l'organe réchauffeur.
- l'organe réchauffeur peut se fixer de manière amovible sur le couvercle, par exemple en s'y insérant axialement au travers d'une ouverture axiale prévue dans le couvercle.
- la partie chauffante est sélectivement en contact avec l'eau liquide du côté propre, c'est-à-dire dans la zone en aval.
- le couvercle présente un conduit axial prévu dans une douille ou partie femelle, réalisé d'une pièce avec le reste du couvercle, apte à coopérer avec une partie mâle d'un connecteur ou raccord appartenant à l'organe réchauffeur.
- le couvercle est pourvu d'un embout tubulaire formant un conduit pour réaliser la sortie du boîtier ; optionnellement ce conduit est transversal par rapport à la direction d'allongement du bol.
- la paroi latérale et la première extrémité axiale peuvent être réalisées en une seule pièce, qui peut optionnellement former un bol (en matériau plastique ou en métal).
- la deuxième extrémité axiale peut former un couvercle s'attachant de manière amovible, éventuellement avec un verrouillage en rotation, à une extrémité de la paroi latérale qui se situe à l'opposé à la première extrémité axiale.
- l'organe réchauffeur présente une partie extérieure, par exemple pourvue du raccord, complémentaire de la partie de chauffage.
- l'organe réchauffeur peut optionnellement se présenter sous la forme d'un réchauffeur crayon.
- l'organe réchauffeur se verrouille en rotation sur le couvercle dans et/ou pour atteindre une configuration proximale d'une extrémité de l'organe réchauffeur par rapport au clapet de la vanne.
- la sortie est formée dans le couvercle, par exemple dans une région périphérique du couvercle, en communiquant avec l'espace intérieur creux.

Selon une particularité, le média de filtration délimite un espace intérieur creux en communication avec la sortie via un passage d'écoulement d'eau liquide épurée formé à une extrémité axiale ouverte de l'élément filtrant, de préférence réalisée sous forme d'un flasque. Ce type de conception est compatible avec une filtration centripète. Typiquement, la partie de chauffage peut traverser l'extrémité axiale ouverte. Dans une variante, la partie de chauffage peut être disposé adjacente à cette extrémité axiale ouverte.

Il peut être prévu de dissocier les moyens de chauffage de l'élément filtrant, afin de rendre ce dernier remplaçable sans besoin de jeter une quelconque partie des moyens de chauffage qui restent par exemple solidaires d'une partie du boîtier en cas de retrait de l'élément filtrant (après ouverture du couvercle). L'élément filtrant peut former une cartouche pourvue d'un accès axial à l'espace interne creux, facilitant l'insertion amovible de la partie chauffante dans une zone centrale du filtre.

Dans des formes de réalisation de l'élément filtrant on peut avoir recours à une ou plusieurs des dispositions suivantes :
- l'élément filtrant est monté amovible dans le boîtier.
- l'élément filtrant présente un flasque, situé à l'opposé de l'extrémité axiale ouverte, qui permet de recouvrir une première extrémité annulaire du média et qui supporte un clapet formant tout ou partie de la vanne.
- à l'intérieur du boîtier, le flasque sépare (de façon étanche) l'espace intérieur creux d'une zone d'aval en communication avec l'entrée.
- l'élément filtrant est adapté pour réaliser une filtration de type centripète, qui optimise la surface disponible du côté sale (la zone d'aval entourant entièrement le média).
- le média filtrant est perméable à l'eau et apte à séparer les particules solides (sans laisser passer des particules fines dont des particules de taille submillimétrique).
- le média filtrant s'étend longitudinalement entre deux flasques dont l'un porte le clapet et l'autre présente une ouverture de passage pour la partie chauffante.
- chacun des deux flasques recouvre une extrémité annulaire correspondante du média filtrant, par exemple en empêchant l'eau de ressortir du média par ses faces axiales.
- à l'état monté de l'élément filtrant, les deux flasques constituent des extrémités de l'élément filtrant permettant de former des zones d'appui axial respectivement contre un fond du bol et contre une partie de contact axial prévue dans le couvercle ; cette partie prévue dans le couvercle est par exemple annulaire et/ou répartie/distribuée autour d'un orifice par lequel passe la partie de chauffage lorsque l'organe réchauffeur est monté solidaire du couvercle.
- le clapet s'emboîte élastiquement dans un orifice de rétention, central, du flasque associé.

Pour ce qui concerne les moyens de chauffage constituant l'organe réchauffeur, on peut prévoir l'une au moins des particularités suivantes :
- l'organe réchauffeur présente un raccord, de préférence un raccord mâle, pour la fixation sur le boîtier au travers d'un orifice de montage.
- partie de chauffage s'étend, à l'intérieur de l'élément filtrant, de façon sensiblement rectiligne depuis le raccord, qui est par exemple un raccord vissable.
- la partie de chauffage a une longueur au moins égale à la moitié de la longueur du média de filtration.
- l'organe réchauffeur est associé à une commande de chauffe régulée et/ou adaptée pour limiter la température de la partie de chauffage en dessous d'un seuil (ce qui permet de préserver l'intégrité du média, qui peut être radialement proche de la partie de chauffage).
- la partie de chauffage est allongée, par exemple sous forme de tige, intégrant optionnellement une résistance/élément CTP à limitation de la température (sans dépasser un seuil, par exemple inférieur à 100°C).
- une paroi externe tubulaire ou plaque de la partie chauffante est métallique ou en céramique.
- la partie de chauffage s'étend dans l'espace intérieur creux.
- un connecteur électrique est prévu dans une partie externe de l'organe réchauffeur, le connecteur électrique étant adjacent au raccord inséré dans la partie femelle du boîtier, par exemple dans le couvercle.
- l'organe réchauffeur est monté séparable du boîtier.
- la partie de chauffage est apte à être insérée dans l'espace intérieur creux en présentant, dans un état monté de l'organe réchauffeur, une extrémité libre en regard d'un clapet de la vanne.

Optionnellement, l'élément filtrant présente une structure tubulaire ajourée, par exemple s'étendant entre deux flasques formant les extrémités de l'élément filtrant. La structure tubulaire peut présenter des reliefs internes, saillants radialement vers l'intérieur et participant au guidage et/ou centrage de la partie de chauffage insérée dans la structure tubulaire de façon parallèle à un axe longitudinal du média. De tels reliefs dans la structure tubulaire permettent par exemple de s'assurer que la partie de chauffage se situe à une distance minimale d'une face interne du média de filtration, par exemple au moins à plus de 4 ou 5 mm, éventuellement à plus de 10 ou 11 mm.

Selon une particularité, la vanne présente un clapet en forme de champignon ou parapluie. Le clapet peut inclure une extrémité de rétention fixée par insertion dans une première ouverture du flasque, le clapet ayant une partie d'obturation permettant de couvrir de manière étanche une ou plusieurs deuxièmes ouvertures du flasque. Le passage pour le reflux peut correspondre à cette ou ces deuxième(s) ouverture(s). La clapet peut être conçu en une seule pièce, avec la partie d'obturation fixement attaché à une tige ou tronçon intermédiaire reliant la partie d'obturation à l'extrémité de rétention.

Selon une particularité, l'entrée et éventuellement l'ouverture sont configurées avec un décalage axial par rapport à l'élément filtrant. A l'état monté de l'élément filtrant, ce dernier présente deux extrémités qui sont en appui respectivement contre deux régions de contact du boîtier. L'entrée est formée dans une extrémité axiale du boîtier qui s'étend au-delà de la région de contact formée pour le contact avec le flasque de fixation pour la vanne.
De cette façon, on s'assure que le média interposé entre les flasques ou extrémités de l'élément filtrant est entouré par une région annulaire qui ne débouche pas radialement vers l'extérieur via l'entrée.

Selon un autre aspect, il est proposé un système d'injection d'eau ou solution aqueuse dans un moteur à combustion interne, comprenant un réservoir d'eau, une ligne d'alimentation en eau pourvue d'une pompe et reliée à une partie d'injection du moteur, et le filtre tel que décrit ci-dessus pour permettre de faire circuler de l'eau liquide purifiée dans la ligne d'alimentation en eau,
dans lequel le système comporte en outre un dispositif de purge pour refouler, dans un mode de purge, l'eau présente dans le boîtier, la vanne comprenant un clapet ouvert dans le mode de purge pour permettre une circulation inversée dans le filtre sans traverser le média.

Le mode de purge peut s'effectuer après chaque arrêt du véhicule, éventuellement en fonction de paramètres représentatifs de conditions froides présentes ou à venir.
le système peut présenter un circuit de recirculation de l'eau ou solution aqueuse. Eventuellement, le filtre est placé dans la ligne d'alimentation, dans le réservoir ou dans le circuit de recirculation.

Selon un autre aspect, il est proposé un élément filtrant conçu comme une cartouche ou insert amovible du filtre susmentionné lorsqu'elle est montée dans le boîtier du filtre, l'élément filtrant comprenant :
- le média de filtration, de forme annulaire en délimitant un espace intérieur creux apte à loger au moins en partie la partie de chauffage par insertion du côté d'une extrémité axiale de l'élément filtrant ;
- un flasque recouvrant une première extrémité annulaire du média et délimitant le passage, le flasque étant situé axialement à l'opposé du côté d'insertion pour la partie de chauffage ; et
- la vanne d'obturation du passage, la vanne étant portée par le flasque et présentant un clapet dont la partie d'obturation recouvre par défaut le passage de manière étanche pour obturer celui-ci, tout en ayant une portion élastiquement déformable permettant au clapet de libérer ledit passage pour refouler de l'eau contenue dans l'espace intérieur creux hors de cet espace via le passage.

La rechange de l'élément filtrant n'implique aucune intervention complexe de démontage d'un composant de pompe. Ce type d'agencement/système permet de s'assurer d'une filtration efficace pendant une longue durée, par exemple en prévoyant de changer le dispositif de filtration de façon périodique, après un certain kilométrage parcouru qui peut être supérieur ou égal à 20000 ou 30000 km par exemple et/ou après un certain nombre d'années d'utilisation. Le clapet, qui peut être de conception simple, est renouvelé avec la cartouche, ce qui limite le risque de défaillance lors de la purge.

Il est aussi proposé, selon l'invention, une utilisation d'un filtre pour permettre de filtrer de l'eau liquide à injecter dans un moteur à combustion interne, en particulier un moteur à essence, dans laquelle le filtre fonctionne selon deux modes distincts, à savoir :
- un premier mode de filtration d'eau, dans lequel l'eau liquide brute à filtrer arrive par l'entrée d'un boîtier du filtre, traverse un média de filtration, de préférence de forme annulaire, prévu dans un élément filtrant monté intérieurement dans le boîter avant de rejoindre sous forme d'eau liquide épurée la sortie du boîtier via une zone d'aval de filtration délimitée par l'élément filtrant ;
- un deuxième mode de purge de l'eau pour refouler de l'eau contenue dans le boîtier en faisant sortir l'eau refoulée par l'entrée, via un passage libéré par une vanne et assurant la communication directe entre l'entrée et la zone d'aval, un fluide gazeux étant injecté dans le boîtier, de préférence via la sortie, pour permettre le reflux d'eau hors du boîtier, de la sortie vers l'entrée via le passage ;
   et dans laquelle la vanne présente un clapet dont la partie d'obturation maintient obturé le passage lorsque l'eau liquide brute entre dans le boîtier via l'entrée dans le premier mode.

Avec ce type d'utilisation, le filtre peut fonctionner efficacement et rapidement malgré des conditions froides. Le média de filtration peut, dans le premier mode, être réchauffé par une partie de chauffage entourée par la paroi latérale du boîtier et inclue dans un organe réchauffeur rendu solidaire du boîtier. Un tel chauffage au coeur du filtre facilite la montée en température dans la région du média de filtration.
Le clapet peut être porté directement par l'élément filtrant, ce qui simplifie la conception du boîtier qui peut former typiquement une partie réutilisable.

On décrit maintenant brièvement les figures des dessins.
La Figure 1 est une vue éclatée d'un filtre conforme à l'invention, ici pourvu d'un élément filtrant à deux flasques opposés dont l'un supporte un clapet s'ouvrant dans un mode de purge et l'autre est traversé par une partie de chauffage d'un réchauffeur.
La Figure 2 est une vue en coupe longitudinale du filtre de la figure 1.
La Figure 3 illustre un mode de fonctionnement normal d'un filtre conforme à l'invention, pour fournir de l'eau filtrée à la sortie du filtre.
La figure 4A illustre un mode de fonctionnement lors d'une purge, avec une vanne en position ouverte pour permettre de réaliser une voie axiale de refoulement, via le passage ainsi libéré par la vanne.
La figure 4B est un détail montrant un exemple non limitatif de clapet permettant, lors d'une circulation en sens inverse, de libérer des passages assurant dérivation par rapport au média de filtration.
La figure 5 illustre schématiquement un exemple d'intégration d'un filtre dans un réservoir pour épurer l'eau délivrée par une ligne de distribution d'eau, tandis que la figure 6 montre schématiquement une intégration du filtre dans une ligne d'alimentation en eau, plus près du ou des injecteurs.

Ci-après un exposé détaillé de plusieurs modes de réalisation de l'invention assorti d'exemples et de référence aux dessins. Sur les différentes figures, des références identiques indiquent des éléments identiques ou similaires.
Le terme « eau » peut désigner de l'eau distillée ou une solution aqueuse dépourvue d'impuretés néfastes pour une injection dans un moteur à combustion interne, par exemple un moteur à essence.

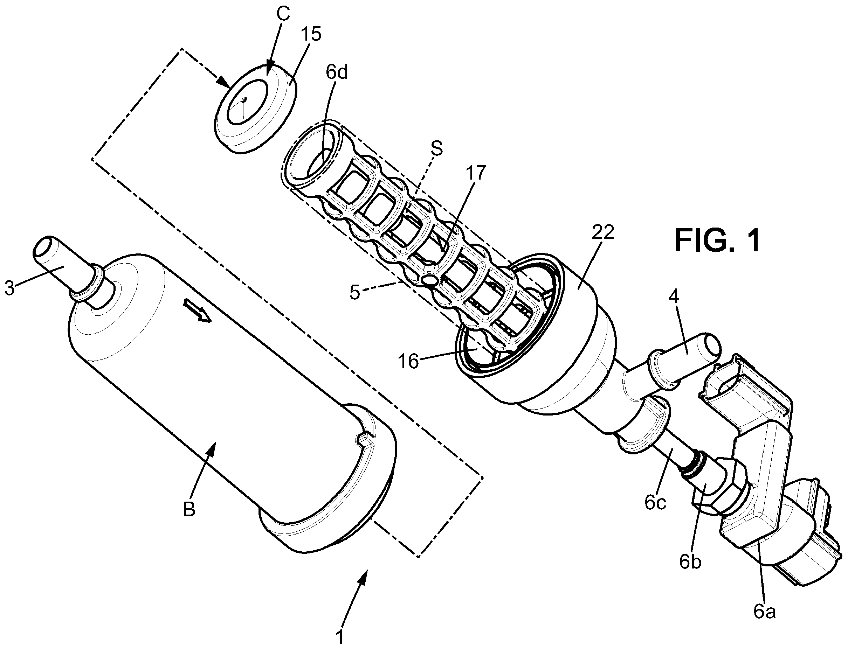

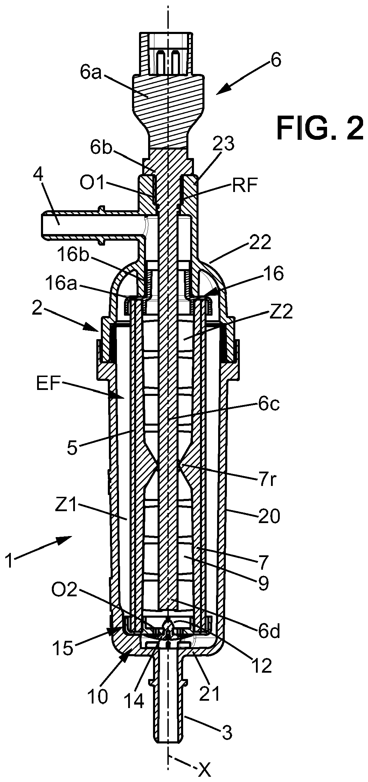

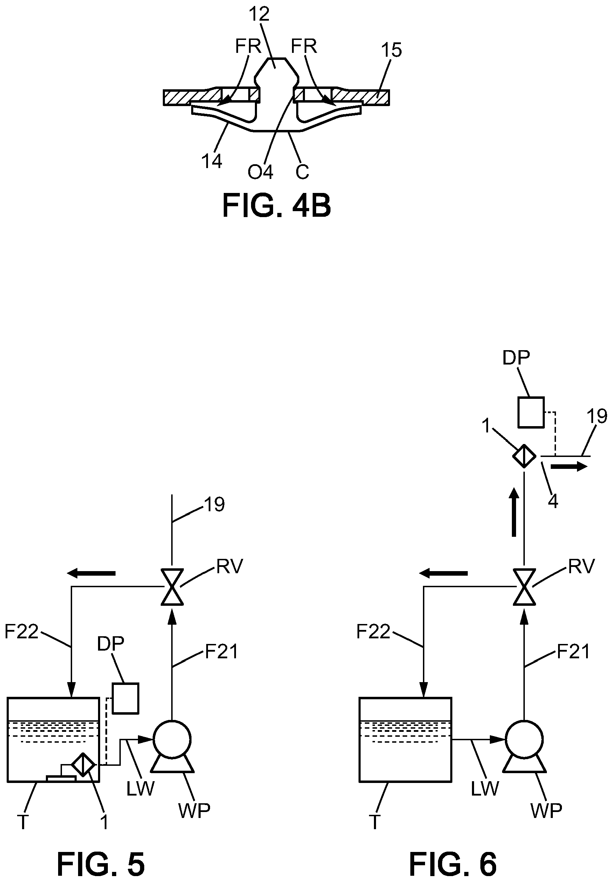

En référence aux figures 1 et 2, il est présenté un filtre 1 permettant de fournir une l'eau liquide épurée, à partir d'une eau liquide brute pouvant provenir d'un réservoir T (visible sur la figure 5 ou 6) présent dans un véhicule motorisé. Lorsqu'une injection d'eau ains épurée est requise au niveau du moteur, par exemple un moteur à essence, le filtre 1 permet à l'eau épurée de rejoindre une ligne 19 d'alimentation (éventuellement en rejoignant une ligne d'alimentation en air) pour être distribuée de façon dosée dans la chambre de combustion. Le liquide filtré est typiquement de l'eau ou une solution liquide aqueuse permettant cette distribution via un injecteur spécifique. Il faut comprendre l'expression « eau » comme désignant ce type de liquide.

Sur les figures 5 et 6, on peut voir que l'eau stockée dans un réservoir T peut être prélevée par un module de prélèvement ou par une pompe WP qui est associée au filtre 1. La pompe WP peut être électrique. Le filtre 1 peut être intégré dans le réservoir T (comme visible sur la figure 5) ou à la sortie d'un tel réservoir T, de façon compacte, en amont de l'aspiration, de sorte que la ligne de distribution LW prévue entre le réservoir T et l'injecteur puisse acheminer de l'eau liquide filtrée qui ne nécessite plus de traitement de filtration. La flèche F21 sur la figure 5 illustre le sens de cette circulation d'eau filtrée. Optionnellement un chauffage de l'eau peut aussi être réalisé du côté du réservoir T.

Dans la variante montrée sur la figure 6, le filtre 1 peut se situer en aval de la pompe WP. De l'eau purifiée peut être ainsi fournie dans la ligne 19, sans filtration faite avant le tronçon de la ligne de distribution passant par la pompe WP. Indépendamment de la position choisie pour le filtre 1, une vanne de recyclage RV peut optionnellement être prévue en aval de la pompe WP, pour permettre un retour d'eau dans le réservoir T.

Dans des formes de réalisation compatibles avec un fonctionnement dans des régions froides, le système de prélèvement est adapté pour permettre une mise à l'arrêt de la pompe d'alimentation WP et vider les volumes d'eau dès que le moteur du véhicule s'éteint. Ceci permet d'éviter les casses de pièces (notamment en hiver ou lors de nuits froides) à cause du gel. Il peut y avoir dans ce cas un amorçage (remplissage avec le volume d'eau) à chaque démarrage du véhicule. La ligne de retour F22 peut participer au mode de purge.

Dans la réalisation non limitative des figures 1 et 2, le filtre 1 présente un composant externe tel qu'un boîtier 2 pour délimiter une chambre ou région de filtration. Le boîtier 2 peut se composer de deux parties, avec un bol B et un couvercle sous forme de partie complémentaire du bol. Ici, le bol B peut consister en une pièce formant une première extrémité axiale 21 (côté fond du bol B) du boîtier 2, tandis que le couvercle forme l'extrémité axiale 22 opposée du boîtier 2.

Indépendamment du nombre exact de pièces à assembler pour former le boîtier, le boîtier 2 présente une paroi latérale 20 agencée autour d'un axe central X et reliée à une première extrémité axiale 21 du boîtier. Le boîtier 2 peut renfermer des moyens de chauffage, avec une partie de chauffage 6c entourée par la paroi latérale 2.

Le filtre 1 peut être du type en ligne, c'est-à-dire avec une entrée 3 et une sortie 4 formées dans le boîtier 2 en étant distribuées respectivement dans l'un et l'autre des composants de boîtier formant les extrémités axiales 21 et 22. Plus généralement, le boîtier 2 présente une entrée 3 pour l'eau liquide brute à filtrer et une entrée 4 pour l'eau liquide purifiée. A l'intérieur du boîtier 2, un élément filtrant EF, pourvu d'un média 5 de filtration, est monté de façon à séparer de façon étanche la chambre de filtration en deux zones :
- une zone Z1 d'amont où circule l'eau arrivant par l'entrée 3 ;
- une zone Z2 d'aval où circule l'eau filtrée via le média 5, la zone Z2 étant en communication avec la sortie 4.

Le média 5 de filtration s'étend typiquement entièrement à l'intérieur du boîtier 2, de façon annulaire entre la première extrémité axiale 21 et la deuxième extrémité axiale 22 du boîtier, le média 5 étant interposé entre l'entrée 3 et la zone d'aval Z2 en formant une face de sortie continue, qui est de préférence sélectivement la face interne lorsque le média 5 a une structure annulaire avec des flasques 15, 16 de l'élément filtrant EF s'opposant à l'écoulement axial sortant par les face axiales de ce média 5.

Le média 5 sépare les impuretés solides de l'eau et peut éventuellement contenir une couche à base de cellulose ou dérivé de cellulose. Le média 5 peut présenter une structure multicouche. Un format annulaire du média 5 peut être choisi, de sorte à délimiter un espace intérieur creux 9.

L'élément filtrant 5 peut constituer un insert jetable du filtre 1. Comme cela est visible sur la figure 1, l'élément filtrant EF comporte une première extrémité pourvue d'un premier flasque ou flasque 15 de fixation permettant le montage d'une vanne de dérivation 10, et une deuxième extrémité pourvue d'un deuxième flasque appelé dans ce qui suit flasque 16 d'accrochage au couvercle. Comme visible sur la figure 2, ce flasque 16 inclut une portion radiale 16a, annulaire, et une projection 16b annulaire qui fait saillie axialement vers l'extérieur (à l'opposé du média 5), par exemple depuis la portion radiale 16a, pour réaliser une zone de contact annulaire étanche Z4 avec le couvercle, à proximité de la sortie 4. Eventuellement un bourrelet saillant radialement vers l'extérieur peut être prévu sur la projection annulaire 16b pour réaliser un tel contact. Optionnellement, un joint additionnel est prévu entre le flasque 16 et le couvercle, pour isoler la zone d'aval Z2 de la région périphérique formée autour du média 5, appartenant à la zone d'amont Z1.

L'élément filtrant EF inclut une structure tubulaire S ajourée entourée par le média 5 de filtration. Cette structure S peut supporter le média 5 par l'intérieur. Le tube ainsi formé peut être clipsé sur les flasques respectifs 15 et 16 et/ou il peut se monter dans des gorges servant aussi loger chacune une des extrémités annulaires du média 5 de filtration.

Dans l'exemple non limitatif illustré, la filtration est de type centripète. Lorsque la filtration est réalisée de façon centripète (ou convergente vers une même région), une première face du média, à l'opposé de l'espace intérieur creux 9, peut présenter une surface supérieure à celle de la deuxième face (intérieure) du média 5 de filtration. On comprend que le flasque 16 correspond à une extrémité ouverte de l'élément filtrant EF, l'ouverture O3 (ici centrale) du flasque 16 permettant à l'eau filtrée circulant dans l'espace intérieur creux 9 délimité par la face interne du média 5 de rejoindre la sortie 4, en sortant axialement de l'élément filtrant EF via l'ouverture O3, en traversant axialement la projection 16b.

Le média filtrant 5 annulaire s'étend entre les deux flasques 15, 16 autour de l'axe longitudinal de l'élément filtrant EF et permet de filtrer le liquide/eau. Cet axe longitudinal peut coïncider avec l'axe central de la paroi latérale 20. Chacun des flasques 15, 16 peut être réalisé en une matière plastique, par exemple par moulage. L'ouverture O3 du flasque 16 peut être large, comparativement de plus grande section que l'ouverture centrale O4 de montage prévue dans le flasque 15 pour la fixation de la vanne 10.

En référence aux figures 1 et 2, l'élément filtrant EF supporte une vanne de dérivation 10, qui qui souvent en réponse à une surpression s'exerçant du côté de la zone d'aval Z2. Dans un état par défaut de fermeture de cette vanne 10, l'élément filtrant EF empêche tout communication directe, sans passer par le média 5, entre la zone Z1 en amont de la filtration (en communication avec l'entrée 3) et la zone Z2 en aval de la filtration (en communication avec la sortie 4). Le flasque 15 de fixation supporte cette vanne 10 qui obture un passage O2 de dérivation qui peut être axial, formé directement dans le flasque 15, comme visible par exemple sur la figure 2.

En référence à la figure 1, l'ensemble formé par l'élément filtrant EF et la vanne 10 définit une cartouche amovible, adaptée pour être montée dans et extraite du volume intérieur du boîtier 2. La vanne 10 peut former une unité ou pièce préassemblée avec l'élément filtrant EP. La fixation mécanique de la cartouche par rapport au boîtier 2 peut se faire à l'opposé de la vanne 10, par exemple par l'insertion de la projection 16b du flasque 16 d'accrochage dans une jupe intérieure du couvercle ou autre organe de prise prévu dans le couvercle/composant de boîtier similaire. Dans une variante, c'est la jupe ou autre partie du couvercle qui peut venir enserrer la projection 16b et réaliser l'étanchéité, le cas échéant avec l'utilisation d'un joint annulaire. Plus généralement, on peut réaliser de toute façon adaptée une étanchéité annulaire flasque-couvercle.

En cas de démontage du boîtier 2, l'élément filtrant EF peut se retirer avec le couvercle pour être extrait du bol B. Une fois une bol B éloigné, il est aisé de détacher l'élément filtrant EF du couvercle, ici avec coulissement le long d'une partie de chauffage 6c d'un organe réchauffeur 6 porté par le couvercle, du côté d'une partie femelle 23 axialement ouverte du boîtier 2. La partie femelle 23 forme ici un orifice O1 axialement traversant, permettant l'insertion de la partie de chauffage 6c qui peut ensuite être logée dans l'espace intérieur creux 9, lorsque l'élément filtrant EF est assemblé avec le couvercle (22, 23).

La sortie 4 est ici prévue sur le couvercle (22, 23), décalée latéralement pour ne pas interférer avec le montage d'un organe réchauffeur 6 de type crayon. Par ailleurs la vanne 10 a un clapet C dont la partie mobile d'obturation 14 qui recouvre le passage O2 du flasque 16 est sélectivement agencée à l'opposé de la partie de chauffage 6c par rapport au flasque 15, de sorte que la mobilité de la partie d'obturation 14 ne peut pas interférer avec la partie de chauffage, même si celle-ci présente une extrémité libre 6d proche du clapet C, e façon à s'étendre au plus près de l'extrémité annulaire 51 du média 5 recouverte par le flasque 15 servant à la fixation de la vanne 10.

Plus généralement lorsqu'il est prévu une conception avec média 5 de filtration annulaire, on peut prévoir tout type de vanne permettant d'obturer par défaut un passage O2, prévu sur le flasque 15 ou sur une autre structure (par exemple la structure tubulaire S) de l'élément filtrant EF pour autoriser une circulation d'eau inversée sans passer par le média 5, de l'espace intérieur creux 9 vers l'entrée 3.

### Exemple de réalisation d'une purge

Le filtre 1 peut faire partie d'un système d'injection d'eau (ou solution aqueuse) dans un moteur à combustion interne pour permettre de faire circuler de l'eau liquide purifiée dans la ligne de distribution/d'alimentation en eau LW. Ce système comporte en outre un dispositif de purge DP, comme visible par exemple sur les figures 5-6, pour refouler l'eau présente dans le boîtier 2, dans un mode de purge avec injection d'un flux gazeux à contre-courant du sens normal de circulation dans le filtre 1. Au moins un clapet C, présent sur le flasque 15 ou du côté de l'élément filtrant EF qui est proximal/le plus proche de l'entrée 3, s'ouvre en réponse à une surpression du côté de la sortie 4, ce qui rend possible un mode de purge pour permettre une circulation inversée dans le filtre 1 sans traverser le média 5.

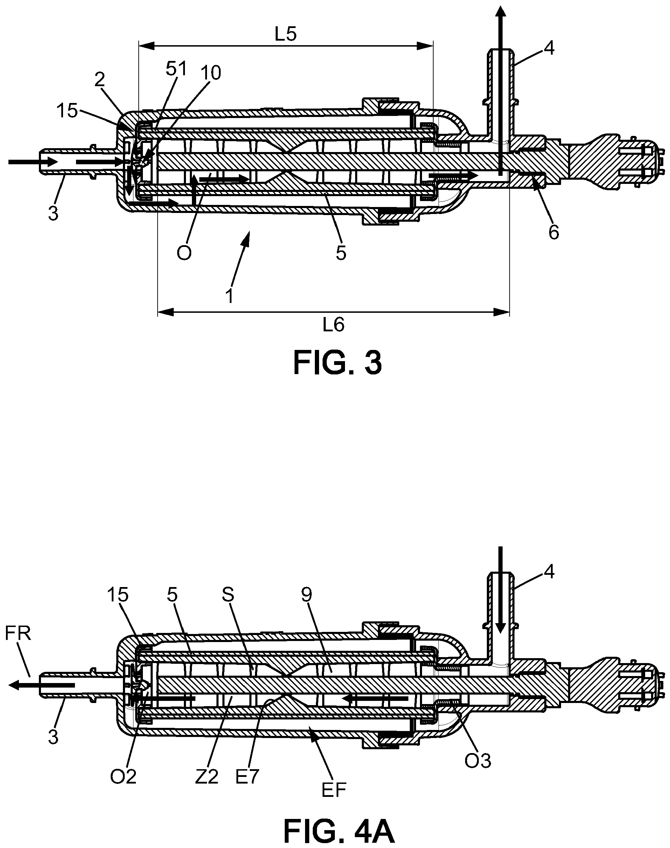

Tandis que la figure 3 illustre un mode d'épuration de l'eau, permis dans la chambre de filtration, grâce à l'élément filtrant EF dont le média 5 laisse sélectivement passer l'eau liquide dans l'espace intérieur communiquant avec la sortie 4 (ici avec une filtration centripète), la figure 4A montre un mode de purge pouvant s'actionner à l'arrêt du véhicule embarquant le filtre 1. A l'état fermé, la vanne 10 n'a aucun impact sur le liquide passant dans la zone d'amont Z1 avant de traverser le média 5 : tout se passe comme si le flasque 15 était plein/non perméable, sans la moindre ouverture. De ce fait, comme illustré sur la figure 3, l'eau liquide brute amenée par l'entrée 3 contourne le flasque 15 pour remplir la zone d'amont Z1 qui entoure ici le média 5. En revanche, une fois que l'eau cesse de rentrer dans le boîtier par l'entrée 3 (à l'arrêt du véhicule) et que le mode de purge est activé, avec typiquement un gaz, tel que l'air, insufflé dans le boîtier 2 via un port d'accès qui peut correspondre à la sortie 4, l'eau encore présente va être poussée sélectivement dans la zone d'aval Z2, ici dans l'espace intérieur creux 9. Les flèches sur la figure 4A illustrent la direction de refoulement.

En référence aux figures 4A et 4B, le clapet C de la vanne reste (au moins en partie) solidaire de l'élément filtrant EF mais peut se déplacer et/ou se déformer au niveau de la partie d'obturation 14 qui recouvre le flasque 15 par l'extérieur. La surpression du côté de l'intérieur de l'élément filtrant EF, dans ce mode de purge, résulte de la mise en air avec un apport gazeux combiné à une liberté d'écoulement de l'eau ressortant par l'entrée 3 pour retourner dans le réservoir T, par exemple via la ligne de retour F22 avec un état ouvert de la vanne RV de retour/recyclage. Le cas échéant, la pompe WP peut aussi bénéficier, au moins partiellement d'une telle mise à l'air.

Comme visible sur la figure 4B, au moins un clapet C anti-retour de type parapluie peut être monté à l'extrémité de l'élément filtrant EF qui se situe à l'opposé de la sortie 4, par exemple sur le flasque 15 à l'état monté de cet élément EF. Le flux inversé FR peut remonter dans l'espace intérieur creux 9, passer dans des ouvertures formant le passage O2 et directement rejoindre, optionnellement sans déviation radiale, le conduit formant l'entrée 3.

Le clapet C peut être de conception simple, avec la partie d'obturation 14 qui maintient obturés plusieurs orifices/ouvertures du flasque 15 formant ledit passage O2 lorsque l'eau liquide brute circule normalement dans le boîtier 2 en étant amenée via l'entrée 3. Cette conception est compatible avec le recours à un seul clapet dont la partie d'obturation 14 a un diamètre important, permettant de recouvrir par exemple au moins un tiers ou au moins la moitié de la surface axiale (sur le côté externe de l'élément EF) définie par le flasque 15. Ce diamètre peut être supérieur à 25 ou 34 mm par exemple.

Le clapet C s'emboîte élastiquement dans un orifice de rétention, ici un orifice central du flasque 15. Plus généralement la vanne 10 peut se monter par l'extérieur sur le flasque 15. Pour cela, la vanne 10 peut présenter un clapet C en forme de champignon ou parapluie, incluant une extrémité de rétention 12 fixée par insertion dans une première ouverture, par exemple formant l'orifice central du flasque 15. Le clapet C peut être réalisé en une seule pièce avec la partie d'obturation 14 reliée à l'extrémité de rétention via un tronçon de tige qui traverse le flasque 15. Un bord annulaire continu de la partie d'obturation 14 permet de réaliser un contact étanche annulaire (autour/à distance radiale du tronçon de tige) contre la face externe du flasque, autour des ouvertures formant le passage O2 : cette partie 14, par exemple plate ou en forme de dôme, recouvre ainsi de manière étanche les ouvertures/orifices du flasque 15. La partie d'obturation 14 est une portion élastiquement déformable permettant au clapet C de libérer le passage O2. Le retour à la position de fermeture se fait par rappel élastique vers la conformation par défaut du clapet C.

On comprend qu'au montage du clapet C, l'extrémité 12 forme une partie d'insertion qui se retrouve pour partie, après insertion dans l'orifice de montage, du côté de/dans l'espace intérieur creux 9. Une zone de gorge correspondant à la partie plus étroite ou zone similaire du tronçon de tige du clapet C est entourée par le flasque 15, tandis que l'extrémité de rétention 12 (appartenant à la partie d'insertion), plus large que l'orifice central, s'oppose au retrait du clapet C. Le matériau du clapet C peut être à base d'un élastomère tel que du silicone ou autre matériau élastiquement déformable.

Le clapet C est adapté, lorsque l'eau liquide brute n'entre plus dans le boîtier 2 via l'entrée 3, à libérer le passage O2 par soulèvement de la partie d'obturation 14 (décollement par rapport à la face externe du flasque 15) dans une configuration de purge d'eau par injection d'un fluide gazeux dans le boîtier 2. Ce fluide gazeux peut arriver par la sortie 4. Lorsque le filtre 1 est adapté pour une filtration centripète, ceci permet un reflux d'eau hors du boîtier 2, dans une zone centrale du boîtier qui n'interfère pas avec la zone annulaire entourant le média qui appartient à la zone d'aval, où peuvent typiquement s'accumuler des particules retenues par le média 5. Une mise à l'air au moins de l'espace intérieur creux 9 peut être obtenue.

En référence à la figure 2, la structure tubulaire S peut présenter des reliefs internes 7r, saillants radialement vers l'intérieur et participant au guidage et/ou centrage de la partie de chauffage 6c. Ces reliefs 7r, par exemple au nombre de trois, quatre ou davantage, écartent la partie de chauffage 6c de la face interne du média 5, en créant localement un contact 17 d'appui radial. La structure S peut consister en une seule pièce 7 en matériau plastique, typiquement rigide. Eventuellement le flasque 16 et la pièce 7 peuvent être clipsés et/ou rendus inséparables. En variante, ils sont optionnellement formés ensemble en une unique pièce plastique.

La partie de chauffage 6c peut éventuellement être sous forme de tige, insérée dans la structure tubulaire S de façon parallèle à un axe longitudinal du média 5. La partie de chauffage 6c est adaptée pour être allongée, par exemple en étant relativement mince. Elle s'étend à l'intérieur de l'élément filtrant EF, de façon sensiblement rectiligne depuis le raccord 6b en ayant une longueur L6 au moins égale à la moitié de la longueur L5 du média 5 de filtration. Le raccord 6b peut présenter une partie d'insertion, se verrouillant par coopération avec une face interne de fixation, formant la région de fixation RF pour solidariser le réchauffeur 6 sur le boîtier 2, typiquement à l'opposé de la vanne 10. La partie d'insertion du raccord 6b peut être adjacente à une partie extérieure plus large et présentant une section non ronde, par exemple polygonale (hexagonale à titre d'exemple non limitatif) pour faciliter une opération de serrage par un outil adapté.

Une face externe de la partie de chauffage 6c peut être cylindrique et/ou dépourvue de relief/lisse pour faciliter le guidage par de tels reliefs 7r. Les reliefs 7r peuvent présenter un côté biseauté du côté par lequel s'insère la partie de chauffage 6c, donc du côté faisant face au flasque 16 dont l'ouverture O3 sert au passage de la partie de chauffage 6c.

Bien entendu, la partie de chauffage 6c et les reliefs 7r ne bloquent pas l'écoulement au sens de l'espace intérieur creux 9. De même que des ouvertures O (cf. figure 3) de la structure S permettent au liquide filtré sortant du média 5 de circuler ensuite dans l'espace 9, des zones d'écartement E7 entre les reliefs 7r permettent à ce liquide de rejoindre axialement la sortie 4, via l'ouverture O3 du flasque 16. Ces zones d'écartement E7 servent aussi au passage d'air/gaz pour refouler l'eau vers l'entrée 3, dans le mode de purge.

Bien entendu, tout type de chauffage peut être réalisé pour s'assurer que du liquide encore présent autour du média 5 de filtration ne reste pas à un état solide. On a illustré ici une partie de chauffage 6c exclusivement disposée dans l'espace intérieur creux 9. En variante, tout ou partie des moyens de chauffage peuvent inclure une région chauffante qui chauffe le flasque 15 et/ou du liquide introduit dans le boîtier 2 par l'entrée 3, avant la filtration par le média 5.

L'organe de chauffage 6 peut être un moyen de chauffage électrique, disposant d'un connecteur électrique 6a, par exemple situé à une extrémité axiale du boîtier 2, comme visible sur la figure 1. Le boîtier 2 qui forme l'enveloppe extérieure du filtre 1 peut être compact, avec une orientation de l'entrée 3 et une orientation de la sortie 4, par exemple sous forme d'embouts à nervure, canule ou similaire, qui sont transversales/perpendiculaires. La direction d'insertion de la tige formant la partie chauffante 6c peut être en alignement avec la direction d'extension de la portion tubulaire de raccordement constituant l'entrée 3.

Il doit être évident pour les personnes versées dans l'art que la présente invention permet des modes de réalisation sous de nombreuses autres formes spécifiques sans l'éloigner du domaine d'application de l'invention comme revendiqué.
Par exemple, bien que les dessins montrent la sortie 4 comme la zone d'injection d'air ou fluide gazeux similaire pour éviter ou minimiser la présence d'eau résiduelle à l'intérieur du filtre 1, un gaz peut tout aussi bien être injecté par un autre point du boîtier 2, par exemple un point haut, permettant un même type de refoulement vers l'entrée 3, via le passage O2 libéré par le clapet C.

## Revendications

1. Filtre à eau (1) pour injection dans un moteur à combustion interne, le filtre comprenant :
- un boîtier (2) pourvu d'une entrée (3) pour l'eau liquide brute à filtrer et d'une sortie (4) d'évacuation pour l'eau liquide épurée,
- un élément filtrant (EF) incluant un média (5) de filtration, se montant dans le boîtier (2) ;
- un organe réchauffeur (6) rendu solidaire du boîtier (2) et présentant une partie de chauffage (6c) disposée dans le boîtier ;
- un passage (O2) de mise en communication directe, sans passer par le média (5), entre l'entrée (3) et une zone (Z2) d'aval de filtration où circule l'eau liquide épurée par le média (5), la zone (Z2) d'aval étant en communication avec la sortie (4) ; et
- une vanne (10) d'obturation du passage (O2), la vanne (10) présentant un clapet (C) dont la partie d'obturation (14) maintient obturé ledit passage (O2) lorsque l'eau liquide brute entre dans le boîtier (2) via l'entrée (3), tout en étant adapté, lorsque l'eau liquide brute n'entre plus dans le boîtier (2) via l'entrée (3), à libérer ledit passage (O2) dans une configuration de purge d'eau par injection d'un fluide gazeux dans le boîtier (2) de préférence via la sortie (4), ce qui permet un reflux d'eau hors du boîtier, vers l'entrée (3) via le passage (O2).

2. Filtre selon la revendication 1, dans lequel le média (5) de filtration délimite un espace intérieur creux (9) en communication avec la sortie (4) via un passage (O3) d'écoulement d'eau liquide épurée formé à une extrémité axiale ouverte de l'élément filtrant (EF), de préférence réalisée sous forme d'un flasque (16), la partie de chauffage (6c) traversant ou étant adjacente à l'extrémité axiale ouverte.

3. Filtre selon la revendication 2, dans lequel l'organe réchauffeur (6) est monté séparable du boîtier (2) et la partie de chauffage (6c) est apte à être insérée dans l'espace intérieur creux (9) en présentant, dans un état monté de l'organe réchauffeur (6), une extrémité libre en regard d'un clapet (C) de la vanne (10).

4. Filtre selon la revendication 1, 2 ou 3, dans lequel le boîtier (2) présente une paroi latérale (20) agencée autour d'un axe central (X) et reliée à une première extrémité axiale (21) du boîtier, la partie de chauffage (6c) étant entourée par la paroi latérale (20) ;
et dans lequel le média (5) de filtration s'étend entièrement à l'intérieur du boîtier (2), de façon annulaire entre la première extrémité axiale (21) et une deuxième extrémité axiale (22) du boîtier opposée à la première extrémité axiale (21), le média (5) étant interposé entre l'entrée (3) et la zone d'aval (Z2).

5. Filtre selon l'une quelconque des revendications précédentes, dans lequel l'organe réchauffeur (6) présente un raccord, de préférence un raccord mâle, pour la fixation sur le boîtier (2) au travers d'un orifice de montage (O1),
et dans lequel la partie de chauffage (6c) s'étend, à l'intérieur de l'élément filtrant (EF), de façon sensiblement rectiligne depuis le raccord (6b) en ayant une longueur (L6) au moins égale à la moitié de la longueur (L5) du média (5) de filtration.

6. Filtre selon l'une quelconque des revendications précédentes, dans lequel l'élément filtrant (EF), monté amovible dans le boîtier (2), présente un flasque (15), situé à l'opposé de l'extrémité axiale ouverte, qui :
- permet de recouvrir une première extrémité annulaire (51) du média ;
- supporte un clapet formant la vanne (10).

7. Filtre selon la revendication 6 lorsqu'elle dépend de la revendication 2, dans lequel le flasque (15) sépare, à l'intérieur du boîtier (2), l'espace intérieur creux (9) d'une zone d'aval (Z2) en communication avec l'entrée (3).

8. Filtre selon l'une quelconque des revendications précédentes, dans lequel la vanne (10) présente un clapet (C) en forme de champignon ou parapluie, incluant une extrémité de rétention (12) fixée par insertion dans une première ouverture (O4) du flasque (15), le clapet (C) ayant une partie d'obturation (14) permettant de couvrir de manière étanche une ou plusieurs deuxièmes ouvertures (O2) du flasque (15).

9. Filtre selon l'une quelconque des revendications précédentes, dans lequel l'élément filtrant (EF) inclut une structure tubulaire (S) ajourée entourée par le média (5) de filtration, la structure tubulaire (S) présentant des reliefs internes (7r), saillants radialement vers l'intérieur et participant au guidage et/ou centrage de la partie de chauffage (6c) insérée dans la structure tubulaire (S) de façon parallèle à un axe longitudinal du média (5).

10. Système d'injection d'eau ou solution aqueuse dans un moteur à combustion interne, comprenant un réservoir d'eau (T), une ligne d'alimentation en eau (LW) pourvue d'une pompe (WP) et reliée à une partie d'injection du moteur, et le filtre (1) selon l'une quelconque des revendications précédentes pour permettre de faire circuler de l'eau liquide purifiée dans la ligne d'alimentation en eau (LW),
dans lequel le système comporte en outre un dispositif de purge (DP) pour refouler l'eau présente dans le boîtier (2) dans un mode de purge, la vanne (10) comprenant un clapet (C) ouvert dans ledit mode de purge pour permettre une circulation inversée dans le filtre sans traverser le média (5).

11. Elément filtrant (EF), conçu comme une cartouche du filtre (1) selon l'une quelconque des revendications 1 à 9 lorsqu'elle est montée dans le boîtier (2) dudit filtre (1), l'élément filtrant (EF) comprenant :
- le média (5) de filtration, de forme annulaire en délimitant un espace intérieur creux (9) apte à loger au moins en partie la partie de chauffage (6c) par insertion du côté d'une extrémité axiale de l'élément filtrant ;
- un flasque (15) recouvrant une première extrémité annulaire (51) du média et délimitant le passage (O2), le flasque (15) étant situé axialement à l'opposé du côté d'insertion pour la partie de chauffage ; et
- ladite vanne (10) d'obturation du passage (O2), la vanne (10) étant portée par le flasque (15) et présentant un clapet (C) dont la partie d'obturation (14) recouvre par défaut ledit passage (O2) de manière étanche pour obturer celui-ci, tout en ayant une portion (14) élastiquement déformable permettant au clapet (C) de libérer ledit passage (O2) pour refouler de l'eau contenue dans l'espace intérieur creux (9) hors de cet espace via le passage (O2).

12. Utilisation d'un filtre (1) pour permettre de filtrer de l'eau liquide à injecter dans un moteur à combustion interne, en particulier un moteur à essence, dans laquelle le filtre fonctionne selon deux modes distincts, à savoir :
- un premier mode de filtration d'eau, dans lequel l'eau liquide brute à filtrer arrive par l'entrée (3) d'un boîtier (2) du filtre, traverse un média (5) de filtration, de préférence de forme annulaire, prévu dans un élément filtrant (EF) monté intérieurement dans le boîter avant de rejoindre sous forme d'eau liquide épurée la sortie (3) du boîtier (2) via une zone (Z2) d'aval de filtration délimitée par l'élément filtrant (EF) ;
- un deuxième mode de purge de l'eau pour refouler de l'eau contenue dans le boîtier (2) en faisant sortir l'eau refoulée par l'entrée (3), via un passage (O2) libéré par une vanne (10) et assurant la communication directe entre l'entrée (3) et ladite zone (Z2) d'aval, un fluide gazeux étant injecté dans le boîtier (2), de préférence via la sortie (4), pour permettre le reflux d'eau hors du boîtier (2), de la sortie (4) vers l'entrée (3) via le passage (O2), le passage (O2) étant délimité par un flasque (15) de l'élément filtrant qui recouvre une première extrémité annulaire (51) du média (5) ;
et dans laquelle la vanne (10) présente un clapet (C) supporté par le flasque (15) et dont la partie d'obturation (14) maintient obturé ledit passage (O2) lorsque l'eau liquide brute entre dans le boîtier (2) via l'entrée (3) dans le premier mode,
le média (5) de filtration pouvant, dans le premier mode, être réchauffé par une partie de chauffage (6c) entourée par la paroi latérale (20) du boîtier (2) et inclue dans un organe réchauffeur (6) rendu solidaire du boîtier (2).
